# FASCICULE DE BREVET EUROPEEN

(11) **EP 1 858 697 B1**
(45) Date de publication et mention de la délivrance du brevet: **24.08.2016**
(21) Numéro de dépôt: 06724991.2
(22) Date de dépôt: 09.03.2006
(51) Int. Cl.: B32B 17/10, G02B 5/02, B60J 3/00

(54) **VITRAGE AUTOMOBILE À DIFFUSION SÉLECTIVE**
AUTOVERGLASUNG MIT SELEKTIVER DIFFUSION
AUTOMOTIVE GLAZING WITH SELECTIVE DIFFUSION

(30) Priorité: 10.03.2005 BE 200500128
(43) Date de publication de la demande: 28.11.2007
(73) Titulaire: AGC Glass Europe, 1348 Louvain-la-Neuve (BE)
(72) Inventeur: CLOSSET, François, GLAVERBEL - Centre R & D, 6040 Jumet (BE); LUCCA, Nerio, GLAVERBEL - Centre R & D, 6040 Jumet (BE); DEGAND, Etienne, GLAVERBEL - Centre R & D, 6040 Jumet (BE)
(74) Mandataire: Bayot, Daisy
(86) Numéro de dépôt international: PCT/EP2006/060582
(87) Numéro de publication internationale: WO 2006/095005

(56) Documents cités:
- EP-A- 0 483 982
- EP-A- 0 778 440
- EP-A- 0 934 912
- EP-A- 1 285 893
- DE-B1- 2 450 704
- US-A- 4 929 523
- US-A- 5 104 210
- PATENT ABSTRACTS OF JAPAN vol. 013, no. 309 (P-898), 14 juillet 1989 (1989-07-14) & JP 01 081901 A (SUMITOMO CHEM CO LTD; others: 01), 28 mars 1989 (1989-03-28)
- PATENT ABSTRACTS OF JAPAN vol. 015, no. 075 (P-1169), 21 février 1991 (1991-02-21) & JP 02 294615 A (NISSAN MOTOR CO LTD; others: 01), 5 décembre 1990 (1990-12-05)

## Description

La présente invention concerne les vitrages automobiles et en particulier les pare-brise.

Les vitrages automobiles traditionnels, qu'ils soient simples ou feuilletés, présentent une grande variété de propriétés optiques. Ils sont en particulier choisis en fonction de leurs qualités de transmission lumineuse. Ils sont également choisis pour certains, pour la sélectivité qu'ils offrent dans la transmission des rayonnements pour filtrer par exemple les infrarouges et/ou les ultraviolets.

L'invention a pour but de proposer des vitrages automobile présentant une diffusion lumineuse sélective selon l'angle d'incidence des rayonnements sur ces vitrages. L'invention a également pour but de proposer des vitrages automobile anti-reflet améliorés. L'invention a encore pour but de proposer des vitrages automobile qui offrent aussi une certaine protection contre l'effet de serre lors de l'exposition au soleil. Ce but est atteint par des vitrages tels que faisant l'objet de la revendication 1.

Selon l'invention, le vitrage automobile considéré est tel qu'il présente la propriété de diffuser une très large part de ces rayons lorsqu'ils sont dans un premier domaine d'angle d'incidence, et de ne présenter qu'une diffusion minime de ces mêmes rayons lorsqu'ils sont hors du domaine d'incidence de diffusion. Dans le domaine à forte diffusion celle -ci est supérieure à 30% de la lumière incidente. Dans le domaine à faible diffusion, elle reste inférieure à 10%.

Pour obtenir cette diffusion sélective différents moyens sont envisageables. Il est possible de faire en sorte que l'effet résulte directement de la structure d'une feuille de verre. Il est aussi possible de constituer le vitrage par association d'au moins une feuille de verre avec une feuille d'un matériau présentent les propriétés indiquées. Par mesure de simplification, dans la suite il est fait référence à des vitrages correspondant à cette association d'au moins

une feuille de verre et d'une feuille de matériau présentant cette propriété de diffusion sélective selon l'angle d'incidence des rayons lumineux.

Les feuilles de matériaux offrant cette diffusion sélective en fonction de l'angle d'incidence de la lumière sont connues par exemple du brevet US 4,929,523. Ces feuilles sont constituées notamment d'un matériau dont l'indice de réfraction n'est pas uniforme sur toute la surface. La feuille comprend de façon générale des zones alternées d'indice fort et d'indice plus faible. Ces zones sont distribuées de manière sensiblement régulière selon une même direction.

Les feuilles de ces matériaux ont été proposées et utilisées essentiellement pour des applications dans le bâtiment. Elles sont mises en oeuvre avec des feuilles de verre par exemple pour constituer des parois offrant suivant certains angles une grande transparence et selon d'autres angles une simple translucidité réservant un caractère "privatif" à l'espace délimité par ces parois. Elles sont aussi proposées pour améliorer l'éclairage de locaux en réfléchissant le rayonnement incident dans des directions non atteintes par la lumière directement transmise lorsque de vitrages ordinaires sont utilisés.

La structure de ces feuilles de matériau à diffusion sélective et leurs propriétés avantageuses dans l'utilisation automobile sont présentées dans la suite de la description en faisant référence aux dessins annexés dans lesquels:
- les figures 1a et 1b représentent de manière schématique en coupe la structure d'une feuille de matériau à transmission sélective entrant selon l'invention dans la constitution d'un vitrage automobile;
- la figure 2 est un graphique représentant les variations de diffusion lumineuse d'une feuille de matériau telle que représentée aux figures 1a et 1b;
- la figure 3 représente de manière schématique en coupe, un pare-brise constitué avec un vitrage dont les propriétés sont celles indiquées à la figure 3;
- la figure 4 est un graphique montrant l'incidence de l'angle d'inclinaison d'un vitrage sur la réflexion;
- la figure 5 illustre les propriétés anti-reflet d'un vitrage selon l'invention utilisé comme pare-brise automobile.
- la figure 6 est une vue partielle schématique en coupe d'un pare-brise selon l'invention;
- la figure 7 illustre les propriétés anti-réfléchissantes obtenues en utilisant un vitrage selon l'invention comme pare-brise;
- la figure 8 représente une coupe partielle d'une lunette arrière selon l'invention.
- la figure 9 est un graphique présentant les composantes de la réflexion en fonction de l'angle d'incidence sur un vitrage.

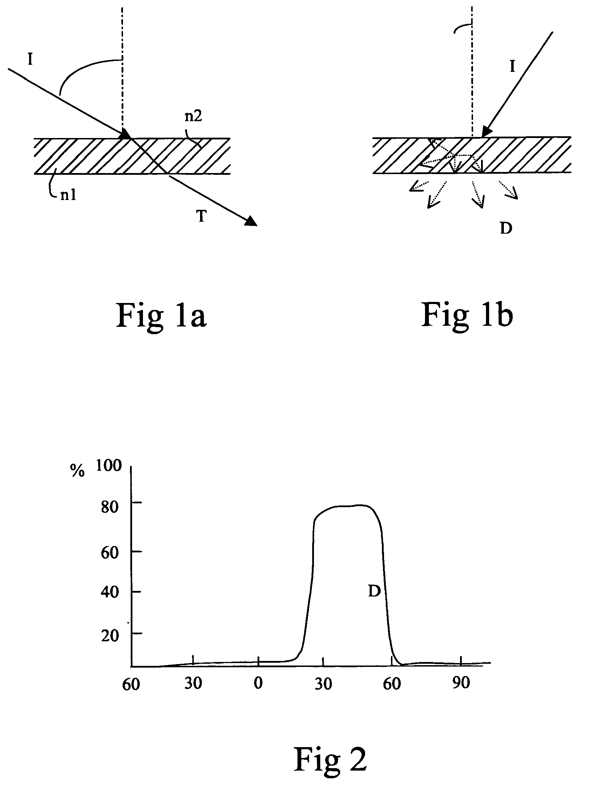

Le principe de fonctionnement des feuilles à diffusion/transmission directe sélective selon l'angle d'incidence est représenté schématiquement aux figures 1a et 1b. D'autres structures sont susceptibles de produire des propriétés analogues. Par mesure de simplification cependant nous faisons référence dans la suite à ces feuilles disponibles dans le commerce. Elles sont produites notamment par la société Sumitomo Chemicals sous le nom "Lumisty".

La feuille présentée en coupe est de façon idéalisée constituée de strates successives inclinées par rapport au plan de la feuille. La structure est en fait moins régulière que ce qui est représenté, mais globalement leur comportement est celui de ces structures. De façon schématique deux sortes de strates correspondant à deux indices distincts n₁ et n₂ sont régulièrement disposées dans l'épaisseur de la feuille. De façon connue ces feuilles sont obtenues par exemple à partir d'un matériau polymérisé de façon distincte suivant les zones concernées polymérisation s'effectue par exemple, par exposition d'une série seulement de ces strates à des rayons actiniques pendant la polymérisation. Ces conditions conduisent à des polymères de masses moléculaires distinctes ou à des degrés de réticulation différents, présentant par suite des indices différents.

Aux figures 1a et 1b les strates sont inclinées par rapport aux faces de la feuille. Cette inclinaison de même que l'épaisseur respective de chaque strate et les différences d'indice entre les deux sortes de strates conditionnent le fonctionnement de ces feuilles vis-à-vis des rayons incidents.

La figure 1a montre, compte tenu de la configuration, un rayon incident I pénétrant sous un angle relativement important par rapport à la surface de la feuille, mais qui se propage et rencontre les strates d'indice n₂ suivant un angle voisin de la normale à ces strates compte tenu de leur disposition dans la feuille. Fonction de cette incidence par rapport aux strates d'indice n₂, le rayon est transmis pratiquement intégralement avec une déviation négligeable. Globalement, vis-à-vis du rayon incident I, la feuille se comporte comme un dioptre à faces parallèles d'indice peu différent de n₁. Le rayon transmis T est de même direction que le rayon incident I, et son intensité n'est réduite qu'en raison de la réflexion qui s'opère sur les faces de la feuille et de l'absorption au sein de celle-ci, lesquelles, pour autant que l'incidence ne soit pas trop rasante et le matériau peu absorbant, restent d'ampleur limitée. Autrement dit le facteur de transmission lumineuse (TL) peut être maintenu relativement élevé. La diffusion est pratiquement inexistante.

La figure 1b pour, le même matériau, illustre le comportement d'un rayon incident dont la direction est voisine de celle des strates dans la feuille. Dans cette configuration, le rayon est dispersé par voie de réflexions et diffractions multiples conduisant globalement à une diffusion D qui peut être quantifiée comme "voile" ("haze").

La mesure de cette diffusion désigne le rapport de l'intensité de la lumière dispersée à celle de la lumière incidente. La mesure est effectuée suivant la norme ASTM D 1003.

La figure 2 est un graphique qui représente la fraction de lumière incidente diffusée en fonction de l'angle d'incidence. Le vitrage de cet exemple est constitué de deux feuilles de verre "float" clair de 2mm d'épaisseur chacune, associées à un intercalaire comportant une feuille à diffusion/transmission directe sélective. Sur ce graphique l'abscisse indique l'angle en degré par rapport à la normale à la feuille, et l'ordonnée le pourcentage de lumière diffusée pour un matériau à transmission sélective typique tel que présenté aux figures 1.

L'inclinaison des strates par rapport à la normale à la feuille est dans cet exemple d'environ 45 degrés. De part et d'autre d'un angle de 45 degrés se trouve un domaine angulaire pour lequel la diffusion représente environ 80% de la lumière incidente. Dans l'exemple représenté, partant de la normale à la feuille, sur un domaine angulaire s'étendant d'environ 25 à environ 55 degrés, la diffusion représente plus de 50% de la lumière incidente. Dans ce domaine la transmission directe est très réduite et le matériau apparaît comme translucide. A l'inverse, en-deça de 20 degrés, et au-delà de 65 degrés, la diffusion disparaît presque complètement. Le matériau offre une transmission directe élevée. Il apparaît comme transparent pour l'observateur situé derrière la feuille.

Les feuilles présentant ces propriétés de diffusion/transmission directe sélective disponibles dans le commerce offrent des combinaisons variées et notamment pour ce qui concerne les domaines de diffusion. Ces domaines sont par exemple situés dans les intervalles angulaires par rapport à la normale à la feuille de 15 à 45 degrés, 35 à 65 degrés, 45 à 75 degrés, 55 à 90 degrés. Pour des domaines de diffusion plus larges il est possible aussi de combiner les effets de plusieurs feuilles superposées. Dans ce cas les domaines de diffusion s'additionnent. Les producteurs proposent des feuilles dont les domaines de diffusion sont par exemple - 25 à 25 degrés ou encore 0 à 55 degrés. Ces exemples ne sont pas limitatifs.

Il est donc possible de choisir les domaines d'angles dans lesquels se situent la diffusion élevée et ceux dans lesquels cette diffusion est très limitée, de façon à répondre aux besoins de l'utilisation envisagée.

Dans l'exemple représenté à la figure 2, en dehors du domaine de forte diffusion (25 à 55 degrés comptés à partir de la normale), la transmission directe est au plus haut. Elle est pratiquement celle des feuilles de verre assemblées. Pour des feuilles de verre clair elle s'établit à plus de 80%.

De façon générale, les vitrages selon l'invention, présentent des domaines dans lesquels la diffusion dépasse 30% de la lumière incidente, et de préférence dans lesquels la diffusion est supérieure à 50% et même supérieure à 70% de la lumière incidente. Ces domaines à très forte diffusion s'étendent sur au moins 10 degrés d'angle, et de préférence sur au moins 15 ou même 20 degrés d'angle. Ces domaines ne dépassent pas de préférence 90 degrés d'angle.

Les vitrages selon l'invention présentent simultanément pour la lumière incidente, des domaines dans lesquels la diffusion est pratiquement inexistante. Dans ces domaines la diffusion ne dépasse pas de préférence 5%, et de manière encore plus préférée reste inférieure à 2%. Ces domaines sont complémentaires des précédents. Ils sont souvent scindés en deux parties de part et d'autre d'un domaine à forte diffusion. Globalement les domaines à faible diffusion, couvrent au moins 30 degrés d'angle, et de préférence, au moins 60 degrés ou même 90 degrés.

Entre les domaines à forte diffusion et à très faible diffusion se situent les zones de transition. La figure 2 qui représente une forme typique de comportement d'un vitrage selon l'invention, montre que la transition est ordinairement très brusque. Le passage d'une zone à l'autre s'étend sur une dizaine de degrés d'angle.

Les propriétés exposées précédemment sont mises à profit selon l'invention dans l'application aux vitrages automobile, notamment aux vitrages qui présentent, une fois installés, une très forte inclinaison par rapport à la verticale. Ces conditions se trouvent de plus en plus sur les véhicules modernes, en particulier pour les pare-brise, et parfois aussi pour les lunettes arrière, ce qui pose de nombreux problèmes en termes par exemple de confort thermique ou d'apparition de réflexions gênant la vision du conducteur.

La mise en oeuvre de l'invention est détaillée dans la suite de la description à propos des pare-brise, mais cette présentation n'est pas limitative. L'invention concerne l'ensemble de l'application à l'automobile de vitrages à diffusion/transmission directe sélective en fonction de l'angle d'incidence de la lumière.

Le cas des pare-brise comme indiqué est particulièrement sensible dans la mesure où, du fait de l'évolution, leur inclinaison est de plus en plus forte d'une part, et d'autre part en raison des contraintes réglementaires auxquelles ils doivent répondre. Parmi celles-ci, figurent notamment les exigences en matière de transmission lumineuse.

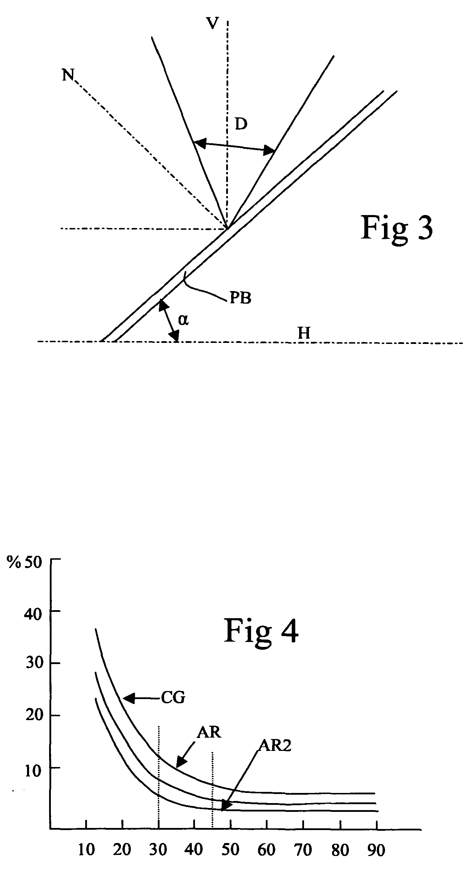

La figure 3 illustre la mise en oeuvre, comme pare-brise, d'un vitrage offrant les propriétés reproduites à la figure 2.

Le pare-brise (PB) est présenté avec une inclinaison par rapport à l'horizontale (H) d'environ 45 degrés (α). Dans cette configuration le domaine d'angle à très forte diffusion (D), situé entre environ 25 et 55 degrés par rapport à la normale (N) au pare-brise, laisse parfaitement dépourvue de diffusion un large domaine angulaire englobant le champ visuel du conducteur.

Cette inclinaison de 45 degrés est tout à fait usuelle pour les véhicules particuliers actuels. En fait la majorité de pare-brise présente une fois installés, une inclinaison comprise entre 20 et 45 degrés. La présentation faite à propos de cette figure 3, peut être reproduite pour l'ensemble de ce domaine d'inclinaison. Les domaines d'angles d'incidence dans ce cas sont seulement décalés en rotation pour tenir compte de l'angle α effectivement choisi. Il est possible aussi de sélectionner une feuille dont les caractéristiques vis-à-vis de la transmission sont différentes de celles indiquées ici, de manière à obtenir la meilleure sélectivité possible en fonction de l'incidence correspondant à l'inclinaison choisie.

Sur la figure 3 on voit que le domaine d'incidence correspondant au maximum de diffusion comprend la direction verticale (V). Autrement dit, cette disposition offre l'avantage de faire obstacle à la transmission directe des rayonnements solaires les plus actifs, ceux correspondant au soleil au zénith. En particulier cette disposition renvoie sous forme diffuse une part significative du rayonnement reçu sous cette incidence verticale. La diffusion s'effectue notamment en partie vers l'extérieur limitant de ce fait, l'énergie pénétrant dans l'habitacle du véhicule. L'utilisation de vitrage conforme à l'invention contribue en conséquence à la limitation des inconvénients "d'effet de serre", liés à la présence des vitrages très inclinés.

En contrepartie, il est vrai la vision à travers le vitrage sous des incidences très "verticales" fait apparaître un aspect translucide. Cette apparence n'est cependant pas gênante s'agissant, pour ce qui est des passagers du véhicule d'un angle de vision tout à fait inhabituel. Vu de l'extérieur, cette particularité est d'autant moins pénalisante que la vision de dessus est encore moins usuelle. Par ailleurs l'utilisation de verres colorés, habitulle pour ces vitrages minimise encore la perception de cette apparence.

Dans tous les cas l'important est bien entendu de préserver la transmission lumineuse directe et de limiter la diffusion dans le champ visuel du conducteur et des passagers du véhicule. L'essentiel de ce champ visuel est nécessairement conforme aux réglementations en vigueur. Suivant ces réglementations, pour le pare-brise, la transmission lumineuse mesurée perpendiculairement au vitrage doit être au moins de 75% en Europe, et 70% aux USA.

Dans le cas représenté on constate que la normale au vitrage est hors de la zone correspondant à la diffusion élevée. Ce domaine à forte diffusion est même loin de la normale au pare-brise. Autrement dit suivant la direction normale la diffusion est pratiquement nulle et la transmission est pratiquement celle d'un vitrage analogue ne comportant pas de feuille à diffusion sélective. La transmission est très élevée et pratiquement sans voile (moins de 2%, et même de préférence moins de 1% de la lumière incidente).

La comparaison des conditions réglementaires avec les domaines d'angles d'incidence des pare-brise constitués selon l'invention, offrant une transmission lumineuse pratiquement sans diffusion, montre que ces conditions sont parfaitement satisfaites et bien au-delà

Une propriété particulièrement avantageuse des vitrages selon l'invention est de permettre de réduire les réflexions gênantes et, notamment, celles qui apparaissent sur les pare-brise et superposent des images parasites à celle observée à travers le pare-brise.

Les images parasites observées sont celles que génèrent les parties de l'habitacle qui émettent ou renvoient un rayonnement lumineux sous une incidence telle qu'une partie au moins est réfléchie dans la zone de vision du conducteur.

Compte tenu de la position du conducteur, seule une partie des éléments de l'habitacle peut générer ces images en réflexion. Dans ce phénomène l'inclinaison du pare-brise intervient de façon très importante. La tendance actuelle est dans le sens de pare-brise de plus en plus inclinés, avec simultanément un accroissement des dimensions du tableau de bord faisant face au pare-brise. Ces conditions favorisent l'apparition de l'image du tableau de bord en réflexion dans le champ visuel du conducteur.

La figure 4 représente la part de réflexion de la lumière incidente, mesurée en fonction de l'angle d'inclinaison par rapport au plan de la feuille, depuis un angle rasant jusqu'à la normale à la feuille (90 degrés) indiqué en abscisse. Une première courbe correspond à une feuille de verre clair de 4mm d'épaisseur, et ne comportant aucune particularité fonctionnelle. Sur la courbe correspondante (CG) on constate que pour le domaine préféré d'inclinaison des pare-brise de 45 à 30 degrés, la part de réflexion passe d'environ 8 à environ 14,5%. Dans les deux cas la réflexion est trop élevée pour éviter la perception des images parasites correspondantes.

La figure 4 présente aussi la mesure de réflexion pour un verre analogue au précédent mais sur lequel un ensemble de couches anti-réfléchissant est disposé sur une face (pour le pare-brise, la face tournée vers l'intérieur de l'habitacle). En choisissant convenablement les couches en question, dans l'espèce un ensemble comportant deux couches superposées d'indices alternés forts et faibles, la réflexion peut être réduite de moitié environ (courbe AR). Des ensembles de couches adéquats sont par exemple :
verre/ Sn02(60Å/)SiO₂(1150Å)
   ou des systèmes plus complexes tels que:
verre/TiO₂(130Å/SiO₂(390Å)/TiO₂(130Å)/SiO₂(920Å)/ Avec la première de ces couches la réflexion s'établit respectivement pour les mêmes inclinaisons de 45 et 30 degrés, à environ 6 et 8%. Bien que réduites ces valeurs de réflexion sont encore trop élevées.

Pour éviter que la vision du conducteur soit perturbée par les images parasites, les constructeurs s'efforcent de limiter la lumière susceptible d'être réfléchie, et choisissent de former les tableaux de bord de couleur sombre et dans des matériaux mats. Cette situation n'est pas satisfaisante, et les constructeurs souhaitent s'affranchir de cette contrainte, notamment pour proposer des intérieurs de couleurs claires. Pour cela ils doivent pouvoir disposer de pare-brise présentant des caractéristiques anti-reflet encore améliorées.

La solution consistant à disposer des couches anti-reflet sur les deux faces externes conduit effectivement à des niveaux de réflexion inférieurs à 5% même pour les inclinaisons les plus fortes (courbe AR2 sur le graphique de la figure 4). Mais l'utilisation de couches anti-reflet dans les pare-brise ne peut concerner que la face tournée vers l'habitacle.

Les couches anti-reflet sont en effet obtenues habituellement par des techniques de dépôt sous vide, notamment par "magnetron sputtering". Ces couches sont relativement fragiles. Tournées vers l'habitacle elles ne sont pas soumises à des sollicitations mécaniques très rigoureuses. A l'inverse, le traitement de la face externe, laquelle doit supporter des épreuves d'usure répétées, notamment du fait du balayage par les essuie-glaces, ne peut être envisagé. Pour cette raison, dans la pratique, l'application de couches anti-reflet est limitée à la face interne, et son effet est insuffisant pour éviter la présence de ces images parasites, notamment celles qui proviennent de la réflexion à l'interface extérieure du vitrage (face 1).

Un des objets de l'invention est de proposer des vitrages "anti-reflet" formés à partir de feuilles de verre associées à une feuille à diffusion/transmission sélective en fonction de l'incidence de la lumière.

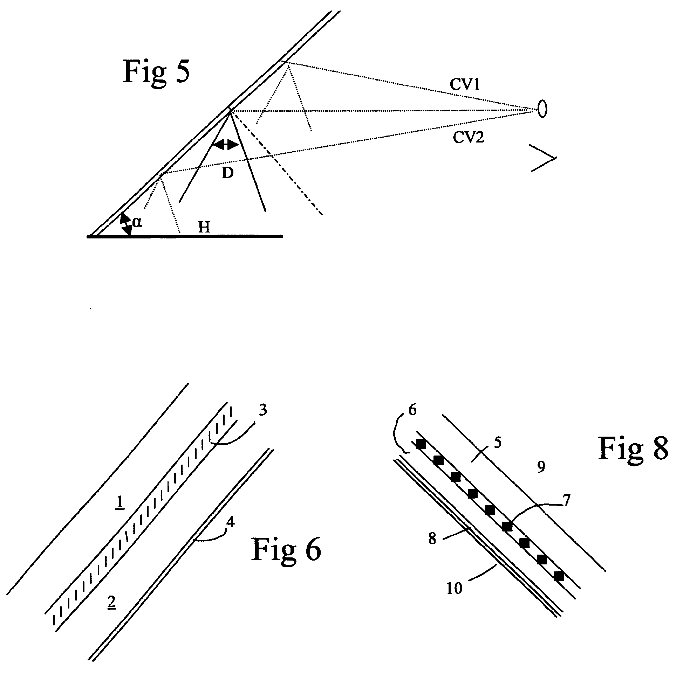

La figure 5 représente schématiquement le fonctionnement "anti-reflet" d'un pare brise constitué à partir d'un vitrage selon l'invention. Sur cette figure le tableau de bord est représenté par la ligne horizontale H.

La lumière pénétrant dans l'habitacle renvoyée par le tableau de bord est en partie réfléchie sur les faces du pare-brise et se retrouve dans le champ visuel du conducteur arbitrairement représenté par les lignes CV1 et CV2. La présence d'une feuille à diffusion sélective, telle que celle dont les caractéristiques sont illustrées à la figure 2, conduit de part et d'autre de cette feuille à des incidences pour lesquelles le rayonnement est diffus. Le domaine angulaire correspondant au maximum de diffusion pour la lumière provenant de l'habitacle est indiqué D à l'horizontale du champ visuel. A ce domaine correspond celui dans lequel le rayonnement provenant de l'habitacle est "dé-réfléchi". Les limites du domaine du rayonnement diffusé, est reporté en pointillé aux extrémités du champ visuel. On constate qu'il englobe pratiquement la totalité du tableau de bord de telle sorte que l'apparition d'images en réflexion est très limitée.

La représentation précédente correspond à celle pour laquelle la feuille à diffusion sélective se situe la première sur le trajet de la lumière provenant du tableau de bord. En pratique les pare-brise doivent présenter une structure feuilletée, une première réflexion s'opère sur la face de verre interne du pare-brise. Pour cette partie réfléchie, la feuille à transmission sélective située entre les deux feuilles de verre n'intervient pas. Pour obtenir un effet anti-reflet amélioré il est donc nécessaire de disposer aussi une couche anti-reflet du type indiqué précédemment sur la face interne du pare-brise comme représenté à la figure 6.

La coupe du vitrage constituant le pare-brise comprend de l'extérieur vers l'intérieur de l'habitacle:
- une première feuille de verre (1) qui peut porter notamment des couches réfléchissant les infrarouges de façon connue, ou une couche conductrice;
- une feuille intercalaire plastique (3) reliant les deux feuilles de verre, cette feuille incluant une feuille à propriétés sélectives de transmission selon l'incidence des rayons, éventuellement associée à des feuilles traditionnellement utilisées pour constituer des vitrages feuilletés;
- une deuxième feuille de verre (2) tournée vers l'habitacle, revêtue sur la face tournée vers l'intérieur d'un ensemble de couches anti-reflet (4).

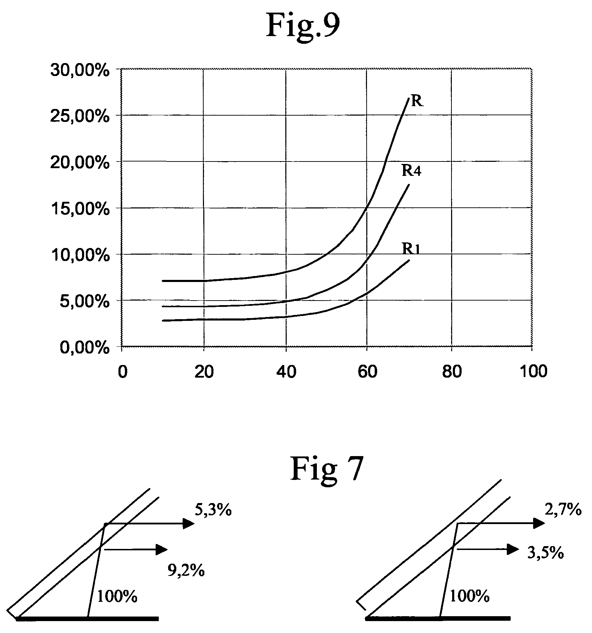

La figure 7 illustre les résultats obtenus avec un vitrage selon l'invention comportant un intercalaire comprenant une feuille de diffusion/transmission directe sélective en fonction de l'incidence, et avec un vitrage traditionnel ne comportant qu'un intercalaire isotrope, dans ce cas une simple feuille de polyvinylbutyral.

Dans l'exemple représenté le pare-brise est formé de deux feuilles de verre "float" de 2mm d'épaisseur chacune, une feuille de verre clair et l'autre de verre légèrement teintée verte. L'inclinaison choisie est de 30 degrés par rapport à l'horizontale dans les deux cas.

Partant d'une valeur d'intensité lumineuse arbitrairement notée 100% émise à partir du tableau de bord, le vitrage traditionnel feuilleté réfléchit 9,2% sur la face interne du pare brise (face 4). Une deuxième réflexion importante intervient sur l'interface extérieure (face 1) et renvoie une intensité de 5,3%.

L'invention a pour but de diffuser une partie significative de cette reflection, son incidence sur le vitrage étant dans le domaine à forte diffusion. La conséquence de cette diffusion étant une diminution significative de la gêne optique causée par la reflection du tableau de bord dans le champ de vision du conducteur.

Le pare-brise selon l'invention comporte encore une couche anti-reflet en face 4. Les valeurs réfléchies vers l'intérieur du véhicule respectivement sur les faces 4 et 1, sont alors de 3,5% et 2,7%. La lumière totale réfléchie est finalement réduite pratiquement de moitié.

A titre indicatif les valeurs des composantes de la réflexion obtenues sur un vitrage feuilleté constitué de deux feuilles de verre clair dépourvues de couches anti-reflet, et assemblées avec une feuille de polyvinylbutyral, sont données en fonction des angles d'incidence mesurés à partir de la normale à la feuille. La réflexion totale R est la somme des réfexions partielles sur les faces 1 et 4, réflexions notées respectivement R1 et R4. Dans cette représentation la lumière provient de l'intérieur, se réfléchit en partie sur la face 4, et de façon plus limitée sur la face 1.

Dans les vitrages selon l'invention, la feuille sélective de la diffusion peut ne couvrir qu'une partie seulement de la ou des feuilles de verre auxquelles cette feuille est associée. Cette limitation peut être préférée en particulier pour des raisons de coût lorsque l'application ne nécessite pas que l'ensemble du vitrage offre ces propriétés. Une application particulière de cette disposition concerne les vitrages qui sont utilisés pour la formation d'images en réflexion qui se superposent à celle perçue par simple transparence.

Ce type de vitrage est utilisé pour l'affichage d'informations destinées par exemple au conducteur dans les dispositifs dits "tête haute". Dans ces vitrages, contrairement à l'exemple précédent, la réflexion sur le pare-brise est volontairement aménagée pour des informations projetées sur le pare-brise. Les moyens mis en oeuvre ont pour inconvénient de conduire à une image double du fait des deux interfaces air-verre. Les deux réflexions ne sont pas de même intensité. La plus forte est celle formée sur la face interne (face 4) du pare-brise. L'introduction d'une feuille à diffusion sélective entre les deux feuilles de verre, éventuellement localisée de façon limitée à la zone destinée à faire apparaître les images réfléchies, permet encore de réduire de manière considérable la seconde réflexion, et de faire pratiquement disparaître cette image double.

Les vitrages selon l'invention qui comprennent une feuille à diffusion/transmission directe sélective peuvent comprendre d'autres éléments fonctionnels avantageusement combinés. Comme indiqué précédemment la présence de feuille à diffusion/transmission sélective peut, par le choix des domaines adéquats, minimiser la transmission directe de la lumière incidente au zénith. La diffusion dans ce cas peut conduire à l'absorption d'une partie des rayons énergétique. Pour obtenir un effet anti-solaire intense, il est connu d'utiliser des couches réfléchissant une forte proportion du rayonnement infrarouge. Ces couches sont notamment celles comprenant une ou plusieurs couches métalliques minces. Une combinaison selon l'invention consiste par exemple à former un vitrage feuilleté dont la première feuille de verre en partant de l'extérieur du véhicule, comporte une telle couche réfléchissant les infrarouges, une feuille intercalaire, ou un ensemble de feuilles intercalaires, comprenant une feuille à diffusion/transmission directe sélective, et une deuxième feuille de verre éventuellement pourvue sur la face interne, d'un ensemble de couches anti-reflet.

Les vitrages anti-solaires sont qualifiés notamment par leur "facteur solaire" (FS) qui est le pourcentage d'énergie pénétrant par le vitrage par rapport à l'énergie solaire incidente. L'énergie pénétrant se compose de celle directement transmise et de la partie de l'énergie absorbée par le vitrage et réémise vers l'intérieur. Avantageusement la feuille de verre comportant un ensemble anti-solaire, présente un facteur solaire inférieur à 60% (mesuré selon la norme EN 410), tout en conservant une transmission lumineuse qui n'est pas inférieure à 80%.

En dehors des vitrages feuilletés, notamment les pare-brise, l'invention vise aussi des ensemble ne comportant qu'une seule feuille de verre. Cette disposition est applicable en particulier aux lunettes arrière. La figure 8 représente ce type d'utilisation.

La représentation est celle dans laquelle la lunette est constituée d'une feuille de verre trempé (5), comportant une feuille à diffusion transmission sélective (6) disposée sur la face tournée vers l'habitacle.

En règle générale, la feuille de verre (5) comporte un réseau de fils chauffants 7 destiné à désembuer ou dégivrer la lunette.

La feuille à diffusion/transmission sélective peut être appliquée directement sur la feuille de verre ou comporter un adhésif (9). Cette feuille étant souvent d'une dureté insuffisante pour la protéger notamment contre les rayures, est avantageusement recouverte d'un film plus résistant, par exemple un film (8) de polytéréphtalate d'éthylène glycol (PET). Comme pour les pare-brise, la lunette arrière pour présenter la meilleure propriété anti-reflet, est encore revêtue sur sa face interne d'une couche anti-reflet (10) traditionnelle appliquée sur la feuille de PET.

## Revendications

1. Vitrage automobile comprenant deux feuilles de verre assemblées sous forme feuilletée au moyen d'un intercalaire comprenant une feuille de matériau qui présente la propriété de diffuser la lumière de façon distincte selon l'angle d'incidence de celle-ci sur le vitrage, un premier domaine d'angle d'incidence correspondant à une diffusion d'au moins 30% de la lumière, et un deuxième domaine d'angle d'incidence correspondant à moins de 10% de diffusion, le vitrage étant installé sur le véhicule automobile, le domaine d'angle de faible diffusion, dans un plan vertical sensiblement perpendiculaire au plan du vitrage, s'étend de part et d'autre de l'horizontale, et le domaine d'angle à forte diffusion, s'étend de part et d'autre de la verticale.

2. Vitrage selon la revendication 1 dans lequel l'intercalaire comprend, en plus de la feuille de matériau dont la diffusion lumineuse dépend de l'incidence, au moins une feuille intercalaire traditionnellement utilisée pour la formation de vitrages feuilletés.

3. Vitrage selon la revendication 1 ou la revendication 2 dans lequel dans le domaine d'angle d'incidence pour lequel la diffusion est faible, cette diffusion n'est pas supérieure à 5% et de préférence inférieure à 2%.

4. Vitrage selon l'une des revendications précédentes dans lequel dans le domaine de forte diffusion, plus de 30%, et de préférence plus de 70% de la lumière est diffusée.

5. Vitrage selon l'une des revendications précédentes dans lequel la diffusion élevée s'étend sur un domaine d'angle d'incidence qui n'est pas inférieur à 10 degrés d'angle, et de préférence pas inférieur à 20 degrés d'angle.

6. Vitrage selon l'une des revendications précédentes dans lequel la zone de diffusion supérieure 5% ne s'étend pas sur un domaine d'angle d'incidence supérieur à 90 degrés d'angle.

7. Vitrage selon l'une des revendications précédentes dans lequel le domaine de diffusion inférieure à 5% s'étend sur au moins 30 degrés d'angle et de préférence 90 degrés d'angle.

8. Vitrage selon l'une des revendications précédentes, lequel est en outre revêtu sur la face tournée vers l'intérieur du véhicule d'une couche mince anti-reflet.

9. Vitrage selon l'une des revendications précédentes constituant un pare-brise automobile.

10. Vitrage automobile selon la revendication 9 dans lequel la feuille dont la diffusion dépend de l'angle d'incidence de la lumière, ne couvre qu'une partie de la surface du pare-brise.

11. Vitrage selon la revendication 10, dans lequel la feuille dont la diffusion dépend de l'angle d'incidence est localisé dans la zone du pare-brise destinée à la réflexion des images de type HUD.

## Patentansprüche

1. Autoverglasung, umfassend zwei Glasscheiben, die in Verbundform mit Hilfe einer Zwischenschicht zusammengefügt sind, die eine Materialfolie aufweist, die die Eigenschaft aufweist, das Licht je nach dem Einfallswinkel von dieser auf die Verglasung zu zerstreuen, wobei ein erster Einfallswinkelbereich einer Streuung von mindestens 30 % des Lichts entspricht und wobei ein zweiter Einfallswinkelbereich mindestens 10 % an Streuung entspricht, wobei sich, nachdem die Verglasung auf dem Kraftfahrzeug installiert ist, der Winkelbereich mit geringer Streuung in einer vertikalen Ebene im Wesentlichen senkrecht zur Ebene der Verglasung auf beiden Seiten der Horizontalen erstreckt und sich der Winkelbereich mit starker Streuung auf beiden Seiten der Vertikalen erstreckt.

2. Verglasung nach Anspruch 1, wobei die Zwischenschicht zusätzlich zu der Materialfolie, deren Lichtstreuung von dem Einfall abhängt, mindestens eine Zwischenschichtfolie aufweist, die traditionell für das Bilden von Verbundscheiben verwendet wird.

3. Verglasung nach Anspruch 1 oder 2, wobei in dem Einfallswinkelbereich, für den die Streuung gering ist, diese Streuung nicht größer als 5 % und vorzugsweise niedriger als 2 % ist.

4. Verglasung nach einem der vorhergehenden Ansprüche, wobei in dem Bereich der starken Streuung mehr als 30 % und vorzugsweise mehr als 70 % des Lichtes gestreut wird.

5. Verglasung nach einem der vorhergehenden Ansprüche, wobei sich die erhöhte Streuung über einen Einfallswinkelbereich erstreckt, der nicht kleiner als 10 Winkelgrade und vorzugsweise nicht kleiner als 20 Winkelgrade ist.

6. Verglasung nach einem der vorhergehenden Ansprüche, wobei sich der Streuungsbereich von über 5 % nicht über einen Einfallswinkelbereich erstreckt, der größer als 90 Winkelgrade ist.

7. Verglasung nach einem der vorhergehenden Ansprüche, wobei sich der Streuungsbereich von unter 5 % über mindestens 30 Winkelgrade und vorzugsweise 90 Winkelgrade erstreckt.

8. Verglasung nach einem der vorhergehenden Ansprüche, die ferner auf der Fläche, die zum Inneren des Fahrzeugs gewandt ist, mit einer dünnen Antireflexschicht beschichtet ist.

9. Verglasung nach einem der vorhergehenden Ansprüche, die eine Kraftfahrzeugwindschutzscheibe bildet.

10. Autoverglasung nach Anspruch 9, wobei die Folie, deren Streuung von dem Einfallswinkel des Lichtes abhängt, nur einen Teil der Fläche der Windschutzscheibe bedeckt.

11. Verglasung nach Anspruch 10, wobei die Folie, deren Streuung von dem Einfallswinkel abhängt, in dem Bereich der Windschutzscheibe lokalisiert ist, der für die Reflexion der Bilder vom Typ des HUDs bestimmt ist.

## Claims

1. Motor vehicle glazing comprising two glass sheets assembled in laminated form using an intermediate sheet comprising a sheet of material which has the property of scattering light in a distinct manner along the angle of incidence of the light on the glazing, a first angle of incidence domain corresponding to a scattering of at least 30% of the light, and a second angle of incidence domain corresponding to less than 10% scattering, when the glazing is installed in the motor vehicle, the domain of low-scattering angle, in a vertical plane approximately perpendicular to the plane of the glazing, extends on both sides of the horizontal, and the domain of high-scattering angle extends on both sides of the vertical.

2. Glazing according to Claim 1, in which the intermediate sheet comprises, in addition to the sheet of material of which the light scattering depends on the incidence, at least one intermediate sheet traditionally used for forming laminated glazing.

3. Glazing according to Claim 1 or Claim 2, in which, in the angle of incidence domain for which the scattering is low, this scattering is not greater than 5% and preferably less than 2%.

4. Glazing according to one of the preceding claims, in which, in the domain of high scattering, more than 30%, and preferably more than 70% of the light is scattered.

5. Glazing according to one of the preceding claims, in which the high scattering extends over an angle of incidence domain which is not less than an angle of 10 degrees, and preferably not less than an angle of 20 degrees.

6. Glazing according to one of the preceding claims, in which the zone of scattering greater than 5% does not extend over an angle of incidence domain greater than an angle of 90 degrees.

7. Glazing according to one of the preceding claims, in which the domain of scattering below 5% extends over an angle of at least 30 degrees and preferably an angle of 90 degrees.

8. Glazing according to one of the preceding claims, which is moreover coated on the side turned towards the inside of the vehicle with an anti-reflective thin layer.

9. Glazing according to one of the preceding claims, forming a motor vehicle windscreen.

10. Motor vehicle glazing according to Claim 9, in which the sheet, of which the scattering depends on the angle of incidence of the light, only covers some of the surface of the windscreen.

11. Glazing according to Claim 10, in which the sheet of which the scattering depends on the angle of incidence is located in the zone of the windscreen intended for reflecting images of the HUD type.
